# EUROPEAN PATENT APPLICATION

(11) **EP 4 765 622 A1**
(43) Date of publication of application: **24.06.2026**
(21) Application number: 24222434.3
(22) Date of filing: 20.12.2024
(51) Int. Cl.: H02P 9/10

(54) **ELECTRICAL OVERVOLTAGE PROTECTION**

(71) Applicant: MAHLE International GmbH, 70376 Stuttgart (DE)
(72) Inventor: BATISTIC, Zan, 5290 Sempeter pri Gorici (SI)
(74) Representative: BRP Renaud & Partner mbB Rechtsanwälte Patentanwälte Steuerberater

(57) **Abstract**

The invention relates to an electrical overvoltage protection (1) with a first, second and third heat sink (2a, 2b, 2c). Furthermore, the overvoltage protection (1) comprises an electrical diode circuit which has a total of twelve Zener diodes (Z1, Z2, Z1', Z2') and is distributed over the three heat sinks (2a-2c). Each of the twelve Zener diodes is therefore arranged on one of the three heat sinks (2a-2c). Furthermore, the electrical diode circuit (3) comprises a first and a second electrical output terminal (10a, 10b). In addition, the diode circuit (3) has a first and a second subcircuit (3a, 3b), which are arranged electrically in series with one another between the two electrical output terminals (10a, 10b). The first subcircuit (3a) comprises a first, a second and a third pair of diodes (4a, 4b, 4c), which are arranged electrically in parallel with one another. Each of the three diode pairs (4a, 4b, 4c) has a first and a second Zener diode (Z1, Z2). The two Zener diodes are arranged electrically in series with each other. In each case, a phase input connection (X, Y, Z) is arranged between a first (Z1) Zener diode and the associated second Zener diode (Z2). The second subcircuit (3b) comprises a fourth, a fifth and a sixth pair of diodes (4d, 4e, 4f), which are arranged electrically parallel to each other. Each of the three diode pairs (4d, 4e, 4f) has a first and a second Zener diode (Z1, Z2). The two Zener diodes are arranged electrically in series with each other. In each case, a phase input connection (A, B, C) is arranged between a first and a second Zener diode (Z1', Z2').

## Description

The present invention relates to an electrical overvoltage protection device, in particular for a 48 Volt or 56 Volt alternator for generating a poly-phase alternating electrical voltage.

Zener diodes suitable for use in 48V electrical systems are not available on the market in a form of a press-fit diode used in high power 48V and 56 V alternators. Use of standard 12V or 24V alternator rectifier diodes results in high number of diodes used which limits the use case for the solution. Another disadvantage of such solution is an uneven current distribution during the overvoltage event resulting in overloading of one of the pairs of the overvoltage protection circuit.

Conventional overvoltage protections are known from US 27322594 A, US 77401996 A and US 20141427 B.

It is an object of the present invention to show new ways in the development of an electrical overvoltage protection for an electrical alternator, in particular for a 48 Volt or 56 Volt alternator for generating a multi-phase electrical alternating voltage. In particular, the object is to create overvoltage protection - implemented on the alternator rectifier - that is as simple as possible in technical terms and therefore inexpensive to manufacture.

This object is solved by the subject matter of the independent patent claims. Preferred embodiments are the subject of the dependent patent claims.

The overvoltage protection according to the invention proposes the use of existing 24V Zener diodes to implement the over voltage protection solution on the 48V and 56V alternators. The overvoltage protection relies on the suppression of the overvoltage transient by limiting the amplitude of the phase voltage to the voltage defined by the Zener diode characteristics. The stator winding to be protected by the proposed rectifier topology shall be configured as two electrically separated delta windings, namely a first delta winding having three phases and a second delta winding having three phases.

The zener diodes are also used for alternator phase voltages rectification.

Further, the Zener diodes are part of an electrical circuit arrangement that is arranged on three separate heat sinks. Each of the heat sinks can therefore not only absorb waste heat generated by the Zener diodes and dissipate it to the environment, but also acts as a specific electrical potential for the circuit arrangement. This allows particularly simple electrical wiring of the Zener diodes using the heat sinks.

This in turn considerably simplifies the design of the overvoltage protection, which in turn leads to the desired cost savings.

Specifically, an electrical overvoltage protection according to the invention comprises a first, a second and a third heat sink. The three heat sinks can consist of an electrically conductive material, but are arranged separately, particularly at a distance from one another, and are thus electrically insulated from one another. Furthermore, the overvoltage protection comprises an electrical diode circuit, which comprises a total of twelve Zener diodes and which is distributed over the three heat sinks. Each of the twelve Zener diodes is therefore arranged on one of the three heat sinks. Furthermore, the electrical diode circuit comprises a first and a second electrical output terminal for providing the electrical voltage generated by the 48-Volt or 56-Volt alternator. In addition, the diode circuit has a first and a second subcircuit, which are arranged electrically in series with one another between the two electrical output terminals. The first subcircuit comprises a first, a second and a third pair of diodes, which are arranged electrically in parallel with each other. Each of the three diode pairs has a first and a second Zener diode. The two Zener diodes are each arranged electrically in series with each other. In each case, a phase input connection is arranged between a first Zener diode and the associated second Zener diode. The second subcircuit comprises a fourth, a fifth and a sixth pair of diodes, which are arranged electrically in parallel with each other. Each of the three diode pairs has a first and a second Zener diode. The two Zener diodes are arranged electrically in series with each other. In each case, a phase input connection is arranged between a first and a second Zener diode. This results in a total of six phase input connections, so that the three phases of the first and second delta winding of the alternator can be connected to three phases of the first and second subcircuit, respectively. A total of two delta windings of an alternator can therefore be connected to the overvoltage protection.

The two electrical output terminals and the Zener diodes of the diode circuit can be electrically connected to each other by means of suitable electrical lines, which in turn can be partially formed by the electrically conductive heat sinks.

Particularly preferably, at least one, preferably each, Zener diode can be a press-fit diode. In this way, the Zener diodes can also carry very high electrical currents, as occur in 48-volt or 56-volt alternators. In this embodiment, the three heat sinks are part of the electrical diode circuit. This simplifies the wiring of the diode circuit. In this embodiment, the three heat sinks have a specific electrical potential.

In a preferred embodiment of the overvoltage protection according to the invention, the first electrical output connection and the three first Zener diodes of the first, second and third diode pair are arranged on the first heat sink. Furthermore, in this embodiment, the second electrical output connection and the three first Zener diodes of the fourth, fifth and sixth diode pair are arranged on the second heat sink. Finally, the three second Zener diodes can be arranged on the third heat sink. In this way, the electrical wiring of the Zener diodes can be kept simple. In addition, efficient and uniform cooling of the Zener diodes is ensured.

In a preferred embodiment, at least one, preferably each, of the phase output connections can be arranged between two heat sinks or on a heat sink. This measure also simplifies the electrical wiring of the Zener diodes.

It is particularly preferred that each first Zener diode can be a P-type diode. Alternatively or additionally, in this variant at least one, preferably each, second Zener diode can be an N-type diode.

According to an advantageous further development each of the three heat sinks is made of a metal and/or configured as a cooling plate.

In a further preferred embodiment, each Zener diode comprises a base body having an upper side from which a diode pin protrudes. The diode pin forms a first electrical diode connection and the base body forms a second electrical diode connection. The base body is arranged in a recess provided on a surface of the respective heat sink, so that the base body is electrically connected to this heat sink. Ion contrast thereto, the diode pin is electrically isolated against this heat sink.

The invention also relates to an electrical alternator for generating a multiphase electrical alternating voltage. The alternator comprises a stator and with a rotor rotatable relative to the stator. The alternator further has a rear and a front alternator bracket. The stator and the rotor are arranged on the rear alternating bracket. Furthermore, the alternator comprises an electrical rectifier with an electrical overvoltage protection according to the present invention. The advantages of the overvoltage protection according to the invention explained above are therefore transferred to the alternator according to the invention.

In a preferred embodiment of the alternator according to the invention, the third heat sink can be attached and electrically connected to the alternator rear bracket.

Further important features and advantages of the invention are apparent from the sub-claims, from the drawings and from the associated description of the figures with reference to the drawings.

It is understood that the features mentioned above and those to be explained below are not only usable in the combination indicated in each case, but also in other combinations or on their own, without departing from the scope of the present invention.

Preferred embodiments of the invention are shown in the drawings and are explained in more detail in the following description, with identical reference signs referring to identical or similar or functionally identical components.

It shows, in each case schematically
- Fig. 1: the structure of an electrical overvoltage protection device according to the invention,
- Fig. 2: an electrical diode circuit of the overvoltage protection,
- Fig. 3: the arrangement of a single Zener diode in the form of a press-fit diode on a heat sink.

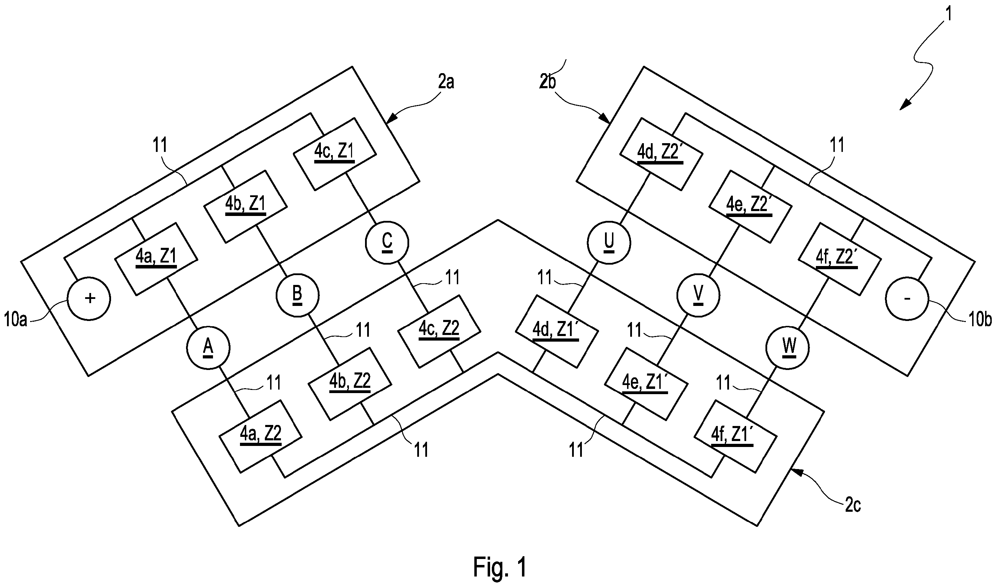

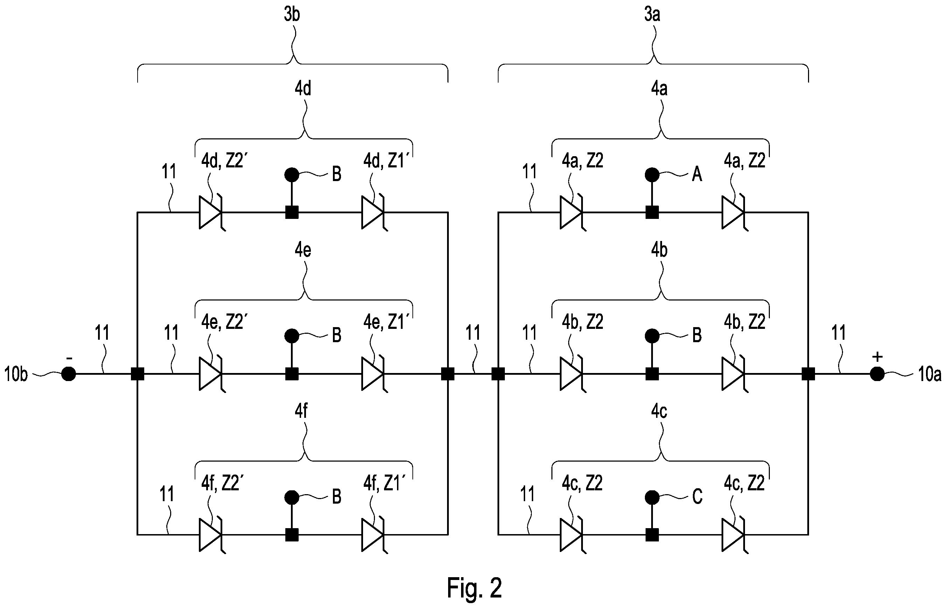

Figure 1 illustrates schematically and by way of example the structure of an electrical overvoltage protection device 1 according to the invention. The device 1 comprises a first, a second and a third heat sink 2a, 2b, 2c. Each of the three heat sinks 2a-2c is formed in the example as a cooling plate made of a metal. Furthermore, the overvoltage protection 1 comprises an electrical diode circuit 3, which is shown in schematic form in Figure 2 and which comprises a total of twelve Zener diodes Z1, Z2, Z1', Z2' and is distributed over the three heat sinks 2a-2c.

According to Figures 1 and 2, each of the twelve Zener diodes Z1, Z2, Z1', Z2' is therefore arranged on one of the three heat sinks 2a-2c.

Furthermore, the electrical diode circuit 3 comprises a first and a second electrical output terminal 10a, 10b for providing an electrical output voltage generated by the phase windings of the alternator. In addition, the diode circuit 3 has a first and a second subcircuit 3a, 3b, which are arranged electrically in series with one another between the two electrical output terminals 10a, 10b.

The first subcircuit 3a comprises a first, a second and a third pair of diodes 4a, 4b, 4c, which are arranged electrically in parallel with one another. Each of the three diode pairs 4a, 4b, 4c has a first and a second Zener diode Z1, Z2. The two Zener diodes Z1, Z2 are each arranged electrically in series with one another. A phase input connection U, V, W for connecting a respective phase winding of the alternator is arranged between a first Zener diode Z1 and the associated second Zener diode Z2 as shown in Figure 2.

The second subcircuit 3b comprises a fourth, a fifth and a sixth pair of diodes 4d, 4e, 4f, which are arranged electrically parallel to each other. Each of these three diode pairs 4d, 4e, 4f has a first and a second Zener diode Z1', Z2'. The two Zener diodes Z1', Z2' are arranged electrically in series with each other. In each case, a phase input connection A, B, C for connecting a respective phase winding of the alternator is arranged between a first and a second Zener diode Z1', Z2'.

The first electrical output terminal 10a and the three first Zener diodes Z1 of the first, second and third diode pairs 4a-4c are arranged on the first heat sink 2a. The second electrical output connection 10b and the three first Zener diodes Z1' of the fourth, fifth and sixth diode pairs 4d, 4e, 4f are arranged on the second heat sink 2b. The second Zener diodes Z2, Z2' are arranged on the third heat sink 2c.

Each of the six phase output terminals U, V, W, A, B, C is arranged as shown either between two of the three heat sinks 2a-2c or on one of the three heat sinks 2a-2c (not shown).

As Figures 1 and 2 show, both electrical output connections 10a, 10b and the Zener diodes Z1, Z2, Z1', Z2' of the diode circuit 3 are electrically connected by means of suitable electrical lines 11.

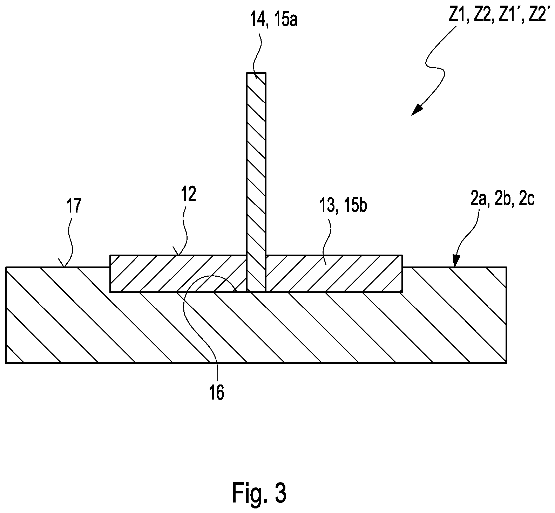

Figure 3 illustrates the structure of one of the Zener diodes Z1, Z2, Z1', Z2' and their respective arrangement on one of the heat sinks 2a to 2c in a rough, i.e. highly simplified, diagram. Accordingly, the Zener diode Z1, Z2, Z1', Z2' shown comprises a base body 13 having an upper side 12 from which a diode pin 14 protrudes. The diode pin 14 forms a first electrical diode connection 15a and the base body 13 forms a second electrical diode connection 15b. The base body is arranged in a recess 16 provided on a surface 17 of the respective heat sink 2a-2c, so that the base body 13 is electrically connected to this heat sink 2a-2c. In contrast thereto, the diode pin 14 is electrically isolated against this heat sink 2a-2c.

## Claims

1. Electrical overvoltage protection (1), in particular for a 48-volt or 56-volt alternator for generating a polyphase electrical alternating voltage,
- with a first, second and third heat sink (2a, 2b, 2c),
- with an electrical diode circuit (3) comprising twelve Zener diodes (Z1, Z2, Z1', Z2') and distributed over the three heat sinks (2a-2c),
- the diode circuit (3) having a first and a second electrical output terminal (10a, 10b) for electrically providing an output voltage generated by the alternator,
- the diode circuit (3) having a first and a second subcircuit (3a, 3b) which are arranged electrically in series with one another between the two electrical output terminals (10a, 10b),
- the first subcircuit (3a) comprising a first, a second and a third pair of diodes (4a, 4b, 4c) which are arranged electrically in parallel with one another, each of the three pairs of diodes (4a, 4b, 4c) having a first and a second Zener diode (Z1, Z2) which are arranged electrically in series with one another, wherein a phase input terminal (U, V, W) being arranged in each case between a first (Z1) and a second Zener diode (Z2),
- the second subcircuit (3b) comprising a fourth, a fifth and a sixth pair of diodes (4d, 4e, 4f) which are arranged electrically in parallel with one another, each of the three pairs of diodes (4d, 4e, 4f) has a first and a second Zener diode (Z1, Z2), which are arranged electrically in series with one another, wherein a phase input terminal (A, B, C) is arranged in each case between a first and a second Zener diode (Z1', Z2').

2. Overvoltage protection according to one of the preceding claims,
**characterized in that**
at least one, preferably each, Zener diode (Z1, Z2, Z1', Z2') is a press-fit diode.

3. Overvoltage protection according to one of the preceding claims,
**characterized in that**
the three heat sinks (2a-2c) are part of the electrical diode circuit (3).

4. Overvoltage protection according to one of claims 1 to 3,
**characterized in that**
- the first electrical output terminal (10a) and the three first Zener diodes (Z1) of the first, second and third diode pairs (4a-4c) are arranged on the first heat sink (2a),
- the second electrical output terminal (10b) and the three first Zener diodes (Z1') of the fourth, fifth and sixth diode pairs (4d, 4e, 4f) are arranged on the second heat sink (2b),
- the three second Zener diodes (Z2, Z2') are arranged on the third heat sink (2c).

5. Overvoltage protection according to one of the preceding claims,
**characterized in that**
at least one, preferably each, of the phase output terminals (U, V, W, A, B, C) is arranged between two heat sinks (2a-2v) or on a heat sink (2a-2c).

6. Overvoltage protection according to one of the preceding claims,
**characterized in that**
- each first Zener diode (Z1, Z1') is a P-type diode; or/and that
- each second Zener diode (Z2, Z2') is an N-type diode.

7. Overvoltage protection according to one of the preceding claims,
**characterized in that**
each of the three heat sinks (2a-2c) is configured as a cooling plate and/or made of a metal.

8. Overvoltage protection according to one of the preceding claims,
**characterized in that**
- each Zener diode (Z1, Z2, Z1', Z2') comprises a base body (13) having a upper side (12) from which a diode pin (14) protrudes, wherein the diode pin (14) forms a first electrical diode connection (15a) and the base body (13) forms a second electrical diode connection (15b),
- wherein the base body (13) is arranged in a recess (16) provided on a surface (17) of the respective heat sink (2a-2c), so that the base body (13) is electrically connected to this heat sink (2a-2c), whereas the diode pin (14) is electrically isolated against this heat sink (2a-2c).

9. Electrical alternator for generating an electrical alternating voltage, in particular a 48 volt or 56 volt alternating voltage,
- with a stator and with a rotor rotatable relative to the stator,
- with a rear and a front alternator bracket, wherein the stator and the rotor are arranged on the rear alternating bracket,
- with an electrical rectifier comprising an electrical overvoltage protection according to one of the preceding claims.

10. Electrical alternator according to claim 9,
**characterized in that**
the third heat sink (2c), is attached and electrically connected to the rear alternating bracket.
